# FASCICULE DE BREVET EUROPEEN

(11) **EP 3 715 186 B1**
(45) Date de publication et mention de la délivrance du brevet: **17.11.2021**
(21) Numéro de dépôt: 20164421.8
(22) Date de dépôt: 20.03.2020
(51) Int. Cl.: B60R 21/02, B60N 2/30

(54) **VÉHICULE UTILITAIRE COMPRENANT UNE CLOISON DE SÉPARATION**
NUTZFAHRZEUG MIT EINER TRENNWAND
UTILITY VEHICLE COMPRISING A SEPARATING PARTITION

(30) Priorité: 26.03.2019 FR 1903145
(43) Date de publication de la demande: 30.09.2020
(73) Titulaire: PSA Automobiles SA, 78300 Poissy (FR)
(72) Inventeur: KOPEC, Franck, 78450 Villepreux (FR); EMELINA, Laurent, 75017 Paris (FR)

(56) Documents cités:
- EP-A1- 2 913 231
- WO-A1-2004/054851
- DE-U1- 9 207 660
- DE-U1- 29 507 297
- GB-A- 2 318 326
- US-A- 4 919 467

## Description

[L'invention se situe dans le domaine de l'aménagement intérieur des véhicules utilitaires, et en particulier des véhicules utilitaires comprenant deux rangées de sièges.

Les véhicules utilitaires doivent permettre de trouver un compromis entre proposer un espace de chargement le plus important possible et garantir une sécurité optimale de leurs utilisateurs en contenant le chargement de sorte à ce qu'il ne pénètre pas de manière intempestive dans l'habitacle en cas de collision frontale du véhicule ou de décélération brutale. A cette fin, il est connu d'installer des structures d'arrêt de charge se présentant sous la forme d'une cloison transversale permettant de séparer l'espace de chargement de l'habitacle du véhicule.

Les cloisons de séparation, également nommées cloisons d'arrêt de charge, sont généralement fixées au pavillon de toit et/ou au plancher du véhicule. Dans certaines architectures, elles sont également fixées aux sièges qu'elles avoisinent. Par exemple, le document FR3034722 décrit un système de fixation siège-cloison d'arrêt de charge d'un véhicule automobile comprenant un élément de fixation, telle qu'une bielle, et des moyens de verrouillage, tel qu'un loquet de verrouillage sollicité par un moyen de rappel élastique.

Lorsque le véhicule comprend deux rangées de sièges, il est possible de fixer les dossiers des sièges arrière à la cloison, ou que la cloison soit partie intégrante des sièges. Le document FR2845954 décrit une cloison fixée directement à un siège arrière de sorte à pouvoir être déplacée avec ledit siège arrière en direction de l'avant du véhicule lors du repliement de ce dernier en vue d'augmenter le volume de la zone de chargement du véhicule.

Lorsque les sièges sont fixés à la cloison, il a été constaté que, lors d'une collision de type frontale, les efforts mis en jeux pouvaient être suffisamment importants pour déplacer la cloison en direction de l'avant du véhicule, ce qui est inacceptable du point de vue de la sécurité des occupants du véhicule.

Le document WO 2004/054851 concerne un véhicule utilitaire selon le préambule de la revendication 1.

L'invention a pour objectif d'apporter une réponse aux inconvénients rencontrés dans l'art antérieur en proposant un véhicule utilitaire qui montre une sécurité accrue pour les passagers.

Par ailleurs, il est intéressant pour un constructeur de pouvoir utiliser une même silhouette de véhicule pour produire une version destinée aux particuliers ou une version utilitaire. L'invention a également pour objectif de proposer un véhicule utilitaire produit à partir d'une architecture polyvalente pouvant être utilisée pour la production d'un véhicule utilitaire ou d'un véhicule destiné aux particuliers, le véhicule comprenant une cloison d'arrêt de charge, et montrant une sécurité accrue pour les passagers, en particulier lorsque les dossiers des sièges sont fixés à la cloison.

A cet effet, et selon un premier aspect, l'invention propose un véhicule utilitaire comprenant un espace intérieur défini par un plancher, un pavillon et des côtés de caisse, et comprenant en outre une cloison d'arrêt de charge séparant l'espace intérieur entre un habitacle et un espace de chargement, ladite cloison présentant des bords latéraux ; le véhicule étant remarquable en ce qu'au moins un des côtés de caisse comprend au moins un dispositif d'ancrage de la cloison, et en ce que ladite cloison est fixée à au moins un desdits dispositifs d'ancrage par un élément de retenue, ledit ou lesdits éléments de retenue étant fixés aux bords latéraux de la cloison. Au moins un dispositif d'ancrage de la cloison se présente sous forme d'un fil de gâche solidarisé à un support et en ce qu'au moins un élément de retenue présente une forme en U comprenant un fond et deux ailes disposées en regard l'une de l'autre définissant un entrefer dans lequel est retenu ledit fil de gâche.

De préférence, ledit ou lesdits éléments de retenue sont fixés aux bords latéraux de la cloison par vissage ou par soudage.

De manière complémentaire ou alternative, un élément de retenue est constitué d'une seule pièce.

Comme on l'aura compris à la lecture de la définition qui vient d'en être donnée, l'invention propose de renforcer l'ancrage de la cloison d'arrêt de charge sur la caisse du véhicule par une fixation d'au moins un de ses bords latéraux sur un des côtés de caisse. Ces points d'ancrage latéraux viennent s'ajouter aux points de fixation de la cloison au plancher et/ou au pavillon de toit. L'ajout de points de fixation supplémentaires de la cloison permet de renforcer la sécurité des passagers par une meilleure retenue de la cloison en cas de transfert de charge lors d'une collision frontale. L'invention est en outre remarquable en ce que la cloison n'est pas fixée directement aux côtés de caisse mais indirectement au moyen d'un dispositif d'ancrage. L'utilisation d'un dispositif d'ancrage permet d'utiliser une même silhouette de véhicule pour produire une version destinée aux particuliers ou une version utilitaire. En effet, le dispositif d'ancrage peut être utilisé pour la fixation latérale de la cloison dans la version utilitaire du véhicule ou, de manière alternative, pour le verrouillage des dossiers de sièges de rang deux en position relevée dans la version du véhicule destinée aux particuliers. Le véhicule utilitaire selon l'invention peut donc être produit à partir d'une architecture polyvalente pouvant être utilisée pour la production d'un véhicule utilitaire ou d'un véhicule destiné aux particuliers, tout en garantissant la sécurité des passagers lorsqu'il est en version utilitaire.

Selon l'invention, au moins un dispositif d'ancrage de la cloison se présente sous forme d'un fil de gâche solidarisé à un support et au moins un élément de retenue présente une forme en U comprenant un fond et deux ailes disposées en regard l'une de l'autre définissant un entrefer dans lequel est retenu ledit fil de gâche. Comme on l'aura compris, le fil de gâche et l'élément de retenue sont entrelacés à la manière de deux maillons consécutifs d'une chaîne.

Avantageusement, au moins un élément de retenue présente une forme de U, ou de fer à cheval, comprenant un fond et deux ailes disposées en regard l'une de l'autre définissant un entrefer dans lequel est inséré un des bords latéraux de la cloison.

Idéalement, au moins un élément de retenue est fixé à la cloison par au moins deux vis de fixation. Selon un mode de réalisation alternatif ou complémentaire, la cloison est en outre fixée au plancher et/ou au pavillon.

Selon un mode de réalisation préférentiel, l'élément de retenue est fixé à la cloison au niveau d'une zone de fixation présentant un renfort. Une telle configuration autorise une meilleure résistance aux chocs. De préférence, la cloison se présente sous la forme d'une tôle et le renfort se présente également sous forme d'une tôle de sorte à ce que la zone de fixation présente deux épaisseurs de tôle superposées. Ainsi, l'élément de retenue peut être disposé de manière à prendre en sandwich entre ses deux ailes à la fois la cloison et le renfort. De manière alternative, l'élément de retenue est disposé de manière à prendre en sandwich entre ses deux ailes la cloison uniquement.

Selon une mise en œuvre préférée de l'invention, l'habitacle comprenant au moins deux rangées de sièges agencées l'une à la suite de l'autre selon la direction longitudinale du véhicule, la deuxième rangée de sièges comprenant au moins un siège avec un dossier pouvant être déplacé entre une position relevée et une position rabattue et des moyens de verrouillage dudit dossier en position relevée, le véhicule est remarquable en ce que la cloison porte au moins un dispositif d'ancrage d'un dossier de siège configuré pour coopérer avec les moyens de verrouillage dudit dossier en position relevée. De préférence, le ou les dispositifs d'ancrage des dossiers de siège comprennent chacun un fil de gâche solidarisé à un support.

Avantageusement, au moins un dispositif d'ancrage de la cloison est configuré pour pouvoir coopérer avec les moyens de verrouillage du ou des dossiers de la deuxième rangée de sièges.

De préférence, la cloison est fixée au plancher et/ou au pavillon et à l'élément de retenue par vissage.

Comme on l'aura compris, le dispositif d'ancrage disposé sur les côtés de caisse va servir à l'ancrage de la cloison lorsque le véhicule est dans sa version utilitaire avec une cloison d'arrêt de charge ou à l'ancrage des dossiers des sièges arrière ou de rang deux lorsque le véhicule est en version destinée aux particuliers. En d'autres termes, l'invention va utiliser un dispositif d'ancrage de la cloison pour fixer les dossiers des sièges arrière aux côtés de caisse du véhicule. Lorsque le véhicule est en version utilitaire, les dossiers des sièges sont ancrés de manière indirecte à la caisse du véhicule au moyen d'un dispositif d'ancrage fixé à la cloison. Les deux types de dispositifs d'ancrage, à savoir ceux portés par les côtés de caisse du véhicule et ceux portés par la cloison sont similaires de manière à ce que les moyens de verrouillage en position relevée des dossiers de siège puissent coopérer avec l'un ou l'autre des dispositifs d'ancrage.

De manière optionnelle, la cloison présente un panneau supérieur et un panneau inférieur formant entre eux un angle compris entre 140° et 175°, ledit angle étant orienté pour être ouvert en direction de l'arrière du véhicule. De préférence, l'angle formé entre le panneau supérieur et le panneau inférieur est compris entre 160° et 170° et/ou l'élément de retenue est fixé à la cloison au niveau de son panneau supérieur. Selon une autre mise en œuvre de l'invention, la cloison est plane.

Selon un deuxième aspect, l'invention a pour objet une cloison d'arrêt de charge pour véhicule utilitaire selon le premier aspect, ladite cloison présentant des bords latéraux, remarquable en ce qu'elle comprend au moins un élément de retenue destiné à coopérer avec un dispositif d'ancrage pour la fixation de la cloison sur les côtés de caisse du véhicule, ledit élément de retenue se présentant sous une forme de U comprenant deux ailes disposées en regard l'une de l'autre et un fond définissant un entrefer dans lequel est inséré un des bords latéraux de la cloison, ledit élément de retenue étant fixé par vissage sur ledit bord latéral.

Selon un troisième aspect, l'invention a pour objet un procédé de montage d'une cloison d'arrêt de charge au sein d'un véhicule selon le premier aspect, le procédé comprenant la fixation d'une cloison à un côté de caisse au moyen d'un élément de retenue coopérant avec un dispositif d'ancrage de la cloison, ledit dispositif d'ancrage de la cloison étant fixé audit côté de caisse. De préférence, le procédé comprend en outre la fixation de ladite cloison sur le plancher et/ou le pavillon par vissage. Le montage de la cloison sur la caisse du véhicule par des moyens de fixation réversibles, tels que des vis de fixation, permet le démontage de la cloison d'arrêt de charge pour sa réparation ou son entretien ou pour son changement.

De préférence, la cloison d'arrêt de charge est une cloison selon le deuxième aspect.

L'invention sera bien comprise et d'autres aspects et avantages apparaîtront clairement à la lecture de la description qui suit, donnée en référence aux figures sur les planches de dessin annexées, sur lesquelles :

[Fig. 1] La figure 1 est une vue arrière de la cloison présentant deux éléments de retenue selon l'invention.

[Fig. 2] La figure 2 est une vue en détail d'un élément de retenue tel que fixé à un bord latéral de la cloison d'arrêt de charge.

[Fig. 3] La figure 3 est une vue d'un élément de retenue selon l'invention.

[Fig. 4] La figure 4 illustre la fixation de la cloison sur un dispositif d'ancrage du véhicule, le côté de caisse du véhicule n'est pas représenté pour des questions de clarté.

Dans la description qui suit, le terme « comprendre » est synonyme de « inclure » et n'est pas limitatif en ce qu'il autorise la présence d'autres éléments dans la cloison ou le véhicule auquel il se rapporte, ou d'autres étapes dans le procédé de montage considéré. Il est entendu que le terme « comprendre » inclut les termes « consister en ». De même, les termes « inférieur », « supérieur », « avant », « arrière », « longitudinal » et « transversal » s'entendront par rapport à l'orientation générale du véhicule tel que pris selon son sens normal de marche. Sur les différentes figures, les mêmes références désignent des éléments identiques ou similaires.

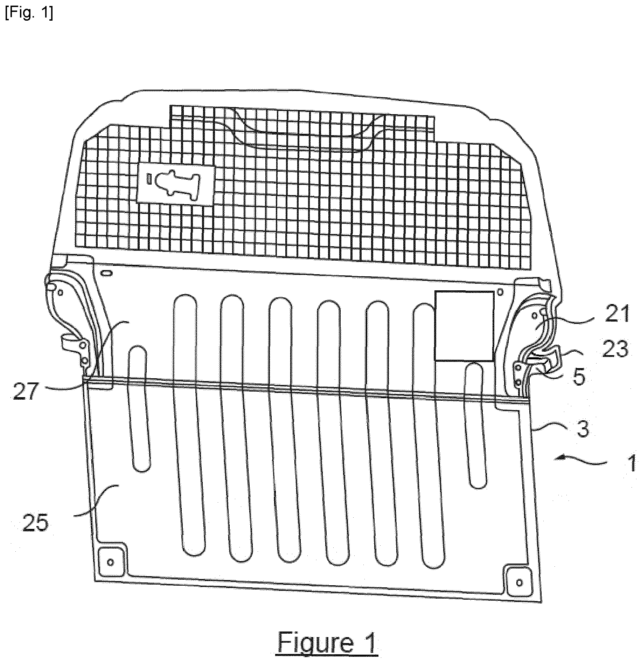

On se référera en premier lieu à la figure 1 illustrant une cloison 1 d'arrêt de charge selon l'invention. La cloison 1 d'arrêt de charge est destinée à être montée au sein d'un véhicule utilitaire comprenant un espace intérieur défini par un plancher, un pavillon et des côtés de caisse. La cloison 1 va séparer l'espace intérieur entre un habitacle et un espace de chargement. La cloison 1 est avantageusement fixée au plancher et/ou au pavillon de toit du véhicule par le biais de ses bords inférieur et supérieur, respectivement. La fixation au plancher et/ou au pavillon de toit se fait avantageusement en au moins deux points.

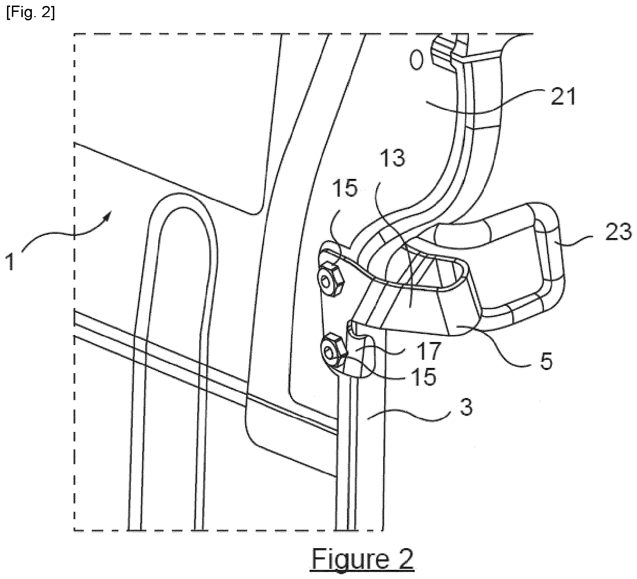

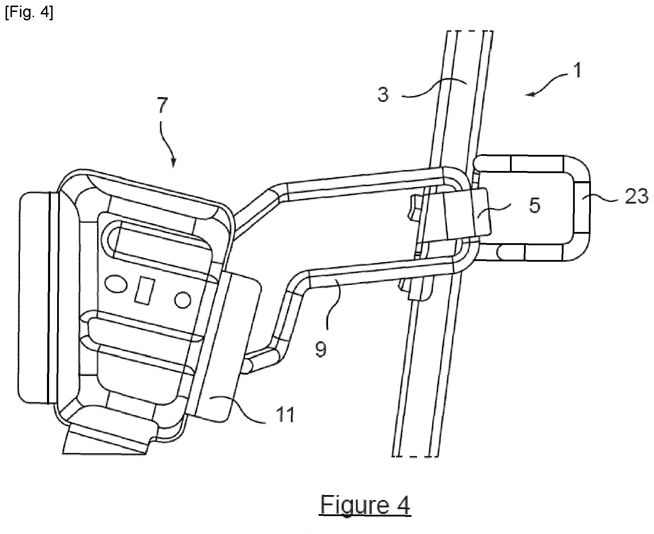

Selon l'invention, la cloison 1 présente des bords latéraux 3 et au moins un élément de retenue 5 fixé sur un de ses bords latéraux 3. Le véhicule comprend, sur au moins un de ses côtés de caisse, au moins un dispositif d'ancrage 7 de la cloison (visible en figure 4), et la cloison 1 est fixée à au moins un desdits dispositifs d'ancrage 7 par un élément de retenue 5. Comme on peut le voir en figure 2, ledit ou lesdits éléments de retenue 5 sont fixés par vissage aux bords latéraux 3 de la cloison 1. De manière préférentielle, l'élément de retenue 5 est constitué d'une seule pièce. L'élément de retenue 5 est préférentiellement réalisé en acier. Sa fixation par vissage aux bords latéraux 3 de la cloison 1 d'arrêt de charge autorise un montage et un démontage facilité de la cloison 1 d'arrêt de charge sur les dispositifs d'ancrage 7.

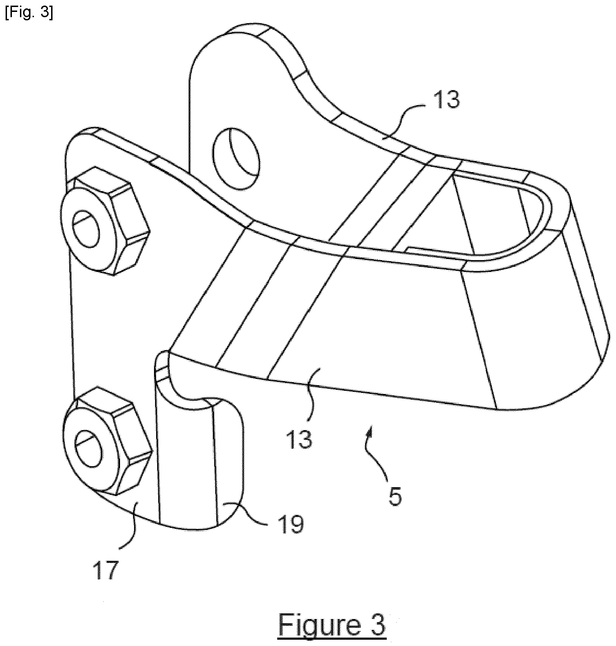

Comme illustré en figure 4, au moins un dispositif d'ancrage 7 de la cloison se présente sous forme d'un fil de gâche 9 solidarisé à un support 11. Le support 11 peut être fixé au côté de caisse par soudage. L'ancrage de la cloison 1 sur le dispositif d'ancrage 7 se fait donc au moyen d'un élément de retenue 5. Avantageusement, comme illustré en détail sur la figure 3, ledit élément de retenue 5 présente une forme en U comprenant deux ailes 13 disposées en regard l'une de l'autre et un fond définissant un entrefer. En revenant à la figure 4, on peut voir que le fil de gâche 9 est reçu dans ledit entrefer. Le fil de gâche 9 du dispositif d'ancrage 7 et l'élément de retenue 5 de la cloison 1 sont entrelacés à la manière de deux maillons consécutifs d'une chaîne.

Comme on peut le voir en détail en figure 2, l'élément de retenue 5 est disposé sur la cloison 1 de sorte à ce que le bord latéral 3 de ladite cloison 1 soit inséré dans son entrefer. La fixation de l'élément de retenue 5 sur la cloison 1 se fait par au moins une vis de fixation, de préférence par au moins deux vis de fixation. Ainsi, le bord 3 de la cloison 1 et l'élément de retenue 5 présentent chacun au moins un trou de passage de manière à former un conduit configuré pour recevoir le passage d'une vis de fixation. L'élément de retenue 5 présentera avantageusement à cet effet au moins un écrou soudé 15 sur une de ses ailes 13. Au moins une vis de fixation relie les deux ailes 13 de l'élément de retenue 5 à la cloison 1. Idéalement, la deuxième vis de fixation est disposée sur une extension 17 d'une desdites ailes 13 comme illustré en figure 3. Avantageusement, ladite extension 17 s'étend verticalement et présente un rebord 19 destiné à se placer en appui contre la tranche du bord latéral de la cloison 1 pour garantir un positionnement correct de l'élément de retenue 5.

Dans un mode de réalisation non illustré, l'élément de retenue peut être fixé à la cloison par soudage. Dans ce mode de réalisation, la cloison n'est pas démontable pour sa maintenance à moins de détruire le ou les éléments de retenue.

Comme illustré en figures 1 et 2, afin d'éviter une déformation de la cloison 1 sous l'effet des efforts de transmission de charge en cas de collision frontale du véhicule, l'homme du métier aura avantage à ce que l'élément de retenue 5 soit fixé à la cloison 1 au niveau d'une zone de fixation présentant un renfort 21. De préférence, la cloison 1 se présente sous la forme d'une tôle et le renfort 21 se présente également sous forme d'une tôle soudée à la cloison de façon à ce que la cloison 1 montre au niveau de la zone de fixation une épaisseur plus importante que sur le reste de son corps. Ainsi, la zone de fixation présente deux épaisseurs de tôle superposées. L'ajout dudit renfort 21 a le rôle de rigidifier la zone de fixation. L'élément de retenue 5 est agencé de manière à prendre en sandwich entre ses deux ailes 13 la cloison 1 et, de manière optionnelle, le renfort 21. Le renfort est préférentiellement disposé sur la face arrière de la cloison 1.

Selon l'invention, l'habitacle comprend au moins deux rangées de sièges (non représentées) agencées l'une à la suite de l'autre selon la direction longitudinale du véhicule, la deuxième rangée de sièges comprenant au moins un siège avec un dossier pouvant être déplacé entre une position relevée et une position rabattue et des moyens de verrouillage dudit dossier en position relevée, et la cloison 1 porte au moins un dispositif d'ancrage 23 d'un dossier de siège configuré pour coopérer avec les moyens de verrouillage dudit dossier en position relevée. De préférence, le ou les dispositifs d'ancrage 23 des dossiers de siège comprennent un fil de gâche solidarisés à un support. Le ou les dispositifs d'ancrage 23 des dossiers de siège sont avantageusement fixés sur la cloison 1 par soudage sur la face avant de ladite cloison 1.

Comme illustré en figure 4, le dispositif d'ancrage 23 des dossiers de siège est agencé pour être aligné selon la direction longitudinale avec le dispositif d'ancrage 7 de la cloison. Les deux fils de gâches sont écartés de quelques centimètres. Ainsi, les dossiers de siège peuvent se fixer sur le dispositif d'ancrage 23 porté par la cloison 1 en présence de celle-ci (donc dans la version utilitaire) ou sur le dispositif d'ancrage 7 porté par le côté de caisse en l'absence de la cloison (c'est-à-dire, dans la version du véhicule destinée aux particuliers). Les moyens de verrouillage des dossiers de siège peuvent atteindre la position de l'un ou l'autre des dispositifs d'ancrage en vue de leur coopération en fonction d'une inclinaison plus ou moins prononcée desdits dossiers de siège. Les points de fixation des sièges sont les mêmes dans les deux versions du véhicule.

Selon un mode de réalisation de l'invention, la cloison 1 présente un panneau supérieur 27 et un panneau inférieur 25 formant entre eux un angle compris entre 140° et 175°, ledit angle étant orienté pour être ouvert en direction de l'arrière du véhicule. De préférence, l'angle entre le panneau supérieur 27 et le panneau inférieur 25 est compris entre 160° et 170°. Cette configuration permet d'agrandir autant que possible l'espace de chargement. Idéalement, l'élément de retenue 5 est fixé à la cloison 1 au niveau de son panneau supérieur 27.

Le corps de la cloison 1 présente des nervures de rigidification pour assurer une meilleure résistance aux efforts suite à une collision. Le panneau supérieur 27 montrera une partie grillagée offrant au conducteur une possibilité de visibilité en arrière par le biais de son rétroviseur.

## Revendications

1. Véhicule utilitaire comprenant un espace intérieur défini par un plancher un pavillon et des côtés de caisse, et comprenant en outre une cloison (1) d'arrêt de charge séparant l'espace intérieur entre un habitacle et un espace de chargement, ladite cloison (1) présentant des bords latéraux (3), au moins un des côtés de caisse comprenant au moins un dispositif d'ancrage (7) de la cloison, et ladite cloison (1) étant fixée à au moins un desdits dispositifs d'ancrage (7) par un élément de retenue (5), ledit ou lesdits éléments de retenue (5) étant fixés aux bords latéraux (3) de la cloison (1), ledit véhicule étant **caractérisé en ce qu'**au moins un dispositif d'ancrage (7) de la cloison se présente sous forme d'un fil de gâche (9) solidarisé à un support (11) et **en ce qu'**au moins un élément de retenue (5) présente une forme en U comprenant un fond et deux ailes (13) disposées en regard l'une de l'autre définissant un entrefer dans lequel est retenu ledit fil de gâche (9).

2. Véhicule selon la revendication 1, **caractérisé en ce que** ledit ou lesdits éléments de retenue (5) sont fixés aux bords latéraux (3) de la cloison (1) par vissage ou par soudage.

3. Véhicule selon la revendication 1 ou 2, **caractérisé en ce qu'**au moins un élément de retenue (5) présente une forme de U comprenant un fond et deux ailes (13) disposées en regard l'une de l'autre définissant un entrefer dans lequel est inséré un des bords latéraux (3) de la cloison (1).

4. Véhicule selon l'une des revendications 1 à 3, **caractérisé en ce que** l'élément de retenue (5) est fixé à la cloison (1) au niveau d'une zone de fixation présentant un renfort (21) ; de préférence, la cloison (1) se présente sous la forme d'une tôle et le renfort (21) se présente également sous la forme d'une tôle, de sorte à ce que la zone de fixation présente deux épaisseurs de tôle superposées.

5. Véhicule selon l'une des revendications 1 à 4, l'habitacle comprenant au moins deux rangées de sièges agencées l'une à la suite de l'autre selon la direction longitudinale du véhicule, la deuxième rangée de sièges comprenant au moins un siège avec un dossier pouvant être déplacé entre une position relevée et une position rabattue et des moyens de verrouillage dudit dossier en position relevée, le véhicule est **caractérisé en ce que** la cloison (1) porte au moins un dispositif d'ancrage (23) d'un dossier de siège configuré pour coopérer avec les moyens de verrouillage dudit dossier en position relevée ; de préférence, le ou les dispositifs d'ancrage (23) des dossiers de siège comprennent un fil de gâche solidarisé à un support.

6. Véhicule selon la revendication 5, **caractérisé en ce qu'**au moins un dispositif d'ancrage (7) de la cloison est configuré pour pouvoir coopérer avec les moyens de verrouillage du ou des dossiers de la deuxième rangée de sièges.

7. Véhicule selon l'une des revendications 1 à 6, **caractérisé en ce que** la cloison (1) présente un panneau supérieur (27) et un panneau inférieur (25) formant entre eux un angle compris entre 140° et 175°, ledit angle étant orienté pour être ouvert en direction de l'arrière du véhicule ; de préférence l'angle formé entre le panneau supérieur (27) et le panneau inférieur (25) est compris entre 160° et 170° et/ou l'élément de retenue (5) est fixé à la cloison (1) au niveau de son panneau supérieur (27).

8. Cloison (1) d'arrêt de charge pour véhicule utilitaire selon l'une des revendications 1 à 7, ladite cloison (1) présentant des bords latéraux (3), **caractérisée en ce qu'**elle comprend au moins un élément de retenue (5) destiné à coopérer avec un dispositif d'ancrage (7) pour la fixation de la cloison (1) sur les côtés de caisse du véhicule, ledit élément de retenue (5) se présentant sous une forme de U comprenant deux ailes disposées en regard l'une de l'autre et un fond définissant un entrefer dans lequel est inséré un des bords latéraux (3) de la cloison (1), ledit élément de retenue (5) étant fixé par vissage sur ledit bord latéral (3).

9. Procédé de montage d'une cloison (1) d'arrêt de charge au sein d'un véhicule selon l'une des revendications 1 à 7, le procédé comprenant la fixation d'une cloison (1) à un côté de caisse au moyen d'un élément de retenue (5) coopérant avec un dispositif d'ancrage (7) de la cloison, ledit dispositif d'ancrage (7) de la cloison étant fixé audit côté de caisse ; de préférence, le procédé comprend en outre la fixation de ladite cloison (1) sur le plancher et/ou le pavillon par vissage.

## Patentansprüche

1. Nutzfahrzeug mit einem Innenraum, der durch einen Boden, einen Dach und Aufbauseiten definiert ist, und ferner mit einer Lastaufnahmewand (1), die den Innenraum zwischen einem Fahrgastraum und einem Laderaum trennt, wobei die Wand (1) Seitenränder (3) aufweist, wobei mindestens eine der Aufbauseiten mindestens eine Verankerungsvorrichtung (7) der Wand aufweist und die Wand (1) an mindestens einer der Verankerungsvorrichtungen (7) durch ein Halteelement (5) befestigt ist, wobei das mindestens eine Halteelement (5) an den Seitenrändern (3) der Wand (1) befestigt ist, wobei das Fahrzeug **dadurch gekennzeichnet** ist mindestens eine Verankerungsvorrichtung (7) der Trennwand in Form eines mit einem Träger (11) fest verbundenen Schließdrahtes (9) vorliegt und mindestens ein Halteelement (5) eine U-Form mit einem Boden und zwei einander gegenüberliegenden Flügeln (13) aufweist, die einen Luftspalt definieren, in dem der Schließdraht (9) gehalten ist.

2. Fahrzeug nach Anspruch 1, **dadurch gekennzeichnet, dass** das oder die Halteelemente (5) an den Seitenrändern (3) der Trennwand (1) durch Schrauben oder Schweißen befestigt sind.

3. Fahrzeug nach Anspruch 1 oder 2, **dadurch gekennzeichnet, dass** mindestens ein Halteelement (5) eine U-Form aufweist, die einen Boden und zwei einander gegenüberliegende Flügel (13) umfasst, die einen Luftspalt definieren, in den eine der Seitenkanten (3) der Trennwand (1) eingesetzt ist.

4. Fahrzeug nach einem der Ansprüche 1 bis 3, **dadurch gekennzeichnet, dass** das Halteelement (5) an einem eine Verstärkung (21) aufweisenden Befestigungsbereich an der Trennwand (1) befestigt ist. Vorzugsweise ist die Trennwand (1) als Blech und die Verstärkung (21) auch als Blech ausgebildet, sodass der Befestigungsbereich zwei übereinander liegende Blechdicken aufweist.

5. Fahrzeug nach einem der Ansprüche 1 bis 4, wobei der Fahrgastraum mindestens zwei Sitzreihen umfasst, die in Längsrichtung des Fahrzeugs hintereinander angeordnet sind, wobei die zweite Sitzreihe mindestens einen Sitz mit einer Rückenlehne umfasst, die zwischen einer angehobenen Position und einer umgeklappten Position bewegt werden kann, und Mittel zum Verriegeln der Rückenlehne in der angehobenen Position, wobei das Fahrzeug **dadurch gekennzeichnet ist, dass** die Trennwand (1) mindestens eine Verankerungsvorrichtung (23) einer Rückenlehne trägt, die so konfiguriert ist, dass sie mit den Mitteln zum Verriegeln der Rückenlehne in der angehobenen Position zusammenwirkt; Vorzugsweise umfassen die Verankerungsvorrichtung(en) (23) der Sitzlehnen einen an einem Träger befestigten Schließdraht.

6. Fahrzeug nach Anspruch 5, **dadurch gekennzeichnet, dass** mindestens eine Verankerungsvorrichtung (7) der Trennwand so konfiguriert ist, dass sie mit den Verriegelungsmitteln der Rückenlehne(n) der zweiten Sitzreihe zusammenwirken kann.

7. Fahrzeug nach einem der Ansprüche 1 bis 6, **dadurch gekennzeichnet, dass** die Trennwand (1) eine obere Platte (27) und eine untere Platte (25) aufweist, die zwischen sich einen Winkel zwischen 140° und 175° bilden, wobei der Winkel so ausgerichtet ist, dass er in Richtung des Fahrzeughecks offen ist; vorzugsweise liegt der Winkel zwischen der oberen Platte (27) und der unteren Platte (25) zwischen 160° und 170° und/oder das Halteelement (5) ist an der oberen Platte (27) der Trennwand (1) befestigt.

8. Lasttrennwand (1) für ein Nutzfahrzeug nach einem der Ansprüche 1 bis 7, wobei die Trennwand (1) Seitenränder (3) aufweist, **dadurch gekennzeichnet, dass** sie mindestens ein Halteelement (5) aufweist, das dazu bestimmt ist, mit einer Verankerungsvorrichtung (7) zur Befestigung der Trennwand (1) an den Aufbauseiten des Fahrzeugs zusammenzuwirken, wobei das Halteelement (5) U-förmig ist und zwei einander gegenüberliegende Flügel und einen Boden aufweist, der einen Luftspalt definiert, in den eine der Seitenränder (3) der Trennwand (1) eingesetzt ist, wobei das Halteelement (5) befestigt ist durch Verschraubung an der Seitenkante (3).

9. Verfahren zum Montieren einer Lasttrennwand (1) in einem Fahrzeug nach einem der Ansprüche 1 bis 7, wobei das Verfahren das Befestigen einer Trennwand (1) an einer Aufbauseite mittels eines Halteelements (5) umfasst, das mit einer Verankerungsvorrichtung (7) der Trennwand zusammenwirkt, wobei die Verankerungsvorrichtung (7) der Trennwand an der Aufbauseite befestigt ist; Vorzugsweise umfasst das Verfahren ferner das Befestigen der Trennwand (1) am Boden und/oder Dach durch Verschrauben.]

## Claims

1. A utility vehicle comprising an interior space defined by a floor, a roof and sides of a body, and further comprising a load stop partition (1) separating the interior space between a passenger compartment and a loading space, said partition (1) having side edges (3), at least one of the sides of the body comprising at least one device (7) for anchoring the partition, and said partition (1) being fixed to at least one of said anchoring devices (7) by a retaining element (5), said retaining element or elements (5) being fixed to the side edges (3) of the partition (1), said vehicle being **characterized in that** At least one wall anchoring device (7) is in the form of a striker wire (9) secured to a support (11) and at least one retaining element (5) is U-shaped with a bottom and two flanges (13) facing each other defining an air gap in which said striker wire (9) is retained.

2. Vehicle according to claim 1, **characterized in that** said retaining element or elements (5) are fixed to the lateral edges (3) of the partition (1) by screwing or by welding.

3. A vehicle according to claim 1 or 2, **characterized in that** at least one retaining element (5) has a U-shape comprising a bottom and two flanges (13) arranged opposite one another defining an air gap into which one of the lateral edges (3) of the partition (1) is inserted.

4. Vehicle according to one of Claims 1 to 3, **characterized in that** the retaining element (5) is fixed to the partition (1) at a fixing area with a reinforcement (21); preferably, the partition (1) is in the form of a sheet and the reinforcement (21) is also in the form of a sheet, so that the fixing zone has two superposed sheet thicknesses.

5. Vehicle according to one of Claims 1 to 4, the passenger compartment comprising at least two rows of seats arranged one after the other in the longitudinal direction of the vehicle, the second row of seats comprising at least one seat with a back which can be moved between a raised position and a folded-down position and means for locking said back in the raised position, the vehicle is **characterized in that** the partition (1) carries at least one anchoring device (23) for a seat back configured to cooperate with the means for locking said back in the raised position; preferably, the anchoring device(s) (23) of the seat backs comprise a striker wire secured to a support.

6. Vehicle according to claim 5, **characterized in that** at least one device (7) for anchoring the bulkhead is configured so as to be able to cooperate with the locking means of the back or backs of the second row of seats.

7. Vehicle according to one of Claims 1 to 6, **characterized in that** the partition (1) has an upper panel (27) and a lower panel (25) forming between them an angle of between 140° and 175°, said angle being oriented to be open towards the rear of the vehicle; preferably, the angle between the upper panel (27) and the lower panel (25) is between 160° and 170° and/or the retaining element (5) is fixed to the partition (1) at its upper panel (27).

8. A cargo barrier wall (1) for a commercial vehicle according to one of claims 1 to 7, said partition (1) having side edges (3), **characterized in that** it comprises at least one retaining element (5) for co-operating with an anchoring device (7) for fixing the partition (1) to the sides of the body of the vehicle, said retaining element (5) being in the form of a U comprising two wings arranged opposite one another and a bottom defining an air gap into which one of the side edges (3) of the partition (1) is inserted, said retaining element (5) being fixed by screw on said lateral edge (3).

9. A method of mounting a load stop partition (1) in a vehicle according to one of claims 1 to 7, the method comprising fixing a partition (1) to a body side by means of a retaining element (5) cooperating with a partition anchoring device (7), said partition anchoring device (7) being fixed to said body side; preferably, the method further comprises fixing said partition (1) to the floor and/or the roof by screwing.
